# EUROPÄISCHE PATENTSCHRIFT

(11) **EP 0 935 958 B1**
(45) Veröffentlichungstag und Bekanntmachung des Hinweises auf die Patenterteilung: **31.03.2004**
(21) Anmeldenummer: 98810123.4
(22) Anmeldetag: 17.02.1998
(51) Int. Cl.: A61J 3/07, B65B 9/02, B65B 51/16, B24C 3/22, B24C 3/32, B29C 65/18

(54) **Formwalze und Verfahren zum Bearbeiten von Formwalzen**
Forming roll and method for machining forming rolls
Cylindre de formage et méthode d'usinage des cylindres de formage

(43) Veröffentlichungstag der Anmeldung: 18.08.1999
(73) Patentinhaber: SWISS CAPS Rechte und Lizenzen AG, 9533 Kirchberg (CH)
(72) Erfinder: Stolz, Leo, 9608 Ganterschwil (CH)
(74) Vertreter: Wenger, René

(56) Entgegenhaltungen:
- EP-A- 0 227 060
- EP-A- 0 659 523
- WO-A-95/17153
- WO-A-96/31318
- WO-A-97/35686
- FR-A- 1 166 574
- GB-A- 697 044
- US-A- 2 318 718
- US-A- 2 478 505
- US-A- 4 567 714
- DATABASE WPI Section Ch, Week 9423 Derwent Publications Ltd., London, GB; Class A32, AN 94-186130 XP002071599 & JP 06 122 125 A (DAINIPPON PRINTING CO LTD)

## Beschreibung

Die Erfindung betrifft eine Formwalze für eine Maschine zum Herstellen von Formkörpern im Rotary-Die Verfahren und ein Verfahren zum Bearbeiten von solchen Formwalzen mit den Merkmalen des Oberbegriffs der unabhängigen Patentansprüche.

Es ist seit langem bekannt, Formkörper wie beispielsweise Weichgelatinekapseln im sogenannten Rotary-Die Verfahren herzustellen. Ein solches Rotary-Die Verfahren ist beispielsweise in der EP 227 060 beschrieben.

Bei diesem Verfahren werden zwei das Rohmaterial für die Formkörper bildende Bänder zwischen zwei sich gegensinnig drehenden Walzen durchgeführt. Diese Formwalzen weisen auf ihrer Oberfläche Vertiefungen auf, welche von Stegen umrandet sind. Die beiden Bänder werden geeignet bis unter den Schmelzpunkt erwärmt und durch Kräfteeinwirkung der Stege miteinander verschweisst. Gleichzeitig werden durch Abquetschen Formkörper von den Bändern herausgetrennt. Vor der Verschweissung kann mit einem sogenannten Füllkeil ein Füllmittel lokal zwischen die beiden Bänder eingespritzt werden. Das Füllmittel drängt lokal die Bandbereiche in die dafür vorgesehenen Aussparungen der Formwalzen, wodurch Formkörper, beispielsweise Weichgelatinekapseln gebildet werden.

Der Abstand zwischen den beiden Formwalzen und die Dicke der zu verbindenden Materialbänder bestimmt im wesentlichen den auf die Materialbänder einwirkenden Druck und damit die Art und Weise der Verbindung.

Der auf das Band einwirkende Druck darf nicht beliebig gross gewählt werden, weil sonst die Ränder der herzustellenden Formkörper abgequetscht oder zerstört werden. Der Druck darf aber auch nicht beliebig klein gewählt werden, weil sonst die beiden Bänder nicht ausreichend miteinander verbunden werden.

Auch wenn der Druck zum Verbinden der beiden Bänder ausreichend ist, ergeben sich Probleme. Bei Einspritzen des Füllgutes zwischen die beiden Bänder werden die Bänder in die Vertiefungen auf der Formwalze verdrängt. Dabei besteht die Gefahr, dass das Materialband nicht nur ausgedehnt wird, sondern sich über die Stege gegen die Vertiefungen hin verschiebt. Dieser Schlupf des Materialbandes führt zu einer unregelmässigen, insbesondere nicht rotationssymmetrischen bananenartigen Form der hergestellten Formkörper (sogenannte Bananen oder Schiffchen). Es ist nicht möglich, diesen Schlupf durch einen höheren Anpressdruck der beiden Formwalzen zu vermeiden, weil damit die Qualität der Nahtbildung zwischen den beiden Bändern beeinträchtigt würde.

Es ist deshalb eine Aufgabe der vorliegenden Erfindung, die Nachteile des Bekannten zu vermeiden, insbesondere eine Formwalze zu schaffen, welche bei Beibehaltung einer hohen Qualität der Nahtbildung und ausreichender Nahtdicke das Problem des Schlupfes des Materialbandes vermeidet.

Die Formwalze soll ausserdem möglichst einfach und auf wirtschaftliche Art und Weise herstellbar sein.

Erfindungsgemäss werden diese Aufgaben mit einer Formwalze und einem Verfahren zum Bearbeiten einer Formwalze mit den Merkmalen des kennzeichnenden Teils der unabhängigen Patentansprüche gelöst.

Im folgenden wird immer von einer Formwalze gesprochen. Es ist selbstverständlich, dass bei einer Maschine zum Herstellen von Formkörpern im Rotary-Die Verfahren zwei, gegensinnig drehende Formwalzen eingesetzt werden. Die beiden Formwalzen sind in gleicher Weise spiegelbildlich ausgebildet.

Die erfindungsgemässe Formwalze weist eine Oberfläche auf, die mit einer Vielzahl von Vertiefungen zur Aufnahme des herzustellenden Formkörpers versehen ist. Der Formkörper wird durch Einspritzen des Füllguts in diese Vertiefungen verdrängt. Zwei Bänder aus Rohmaterial zum Herstellen der Formkörper werden zwischen zwei gegensinnig drehende Formwalzen durchgeführt.

Die Vertiefungen sind von über die Oberfläche der Formwalze vorstehenden Stegen umgeben. Die Stege pressen die beiden Bänder, beispielsweise Gelatinebänder gegeneinander und verbinden diese je entlang einer geschlossenen Linie.

Zum Vermeiden des Schlupfs der Materialbahnen weist die Oberfläche der Formwalze im Bereich der Stege eine wenigstens teilweise aufgerauhte Oberfläche auf. Durch die Aufrauhung der Oberfläche, insbesondere an der Stegoberfläche, wird die Haftreibung zwischen der Oberfläche der Formwalze und den Bändern erhöht, wodurch der Schlupf verringert wird.

Aufgerauht heisst hier und im folgenden, dass die Oberfläche im Vergleich zu der Oberfläche von bekannten Formwalzen eine grössere Rauheit aufweist, und zwar eine Rauheit mit Werten Rₐ grösser als 1,0 µm.

Eine solche Formwalze ist ausserdem auch besonders wirtschaftlich herstellbar. Das bis anhin notwendige Polieren der Oberfläche der Formwalze entfällt dadurch.

Die Stegoberfläche verläuft etwa parallel zur Oberfläche der Formwalze und ist vorteilhaft über ihre ganze Fläche aufgerauht. Im Bereich der Stegoberfläche liegt das Materialband an der Oberfläche der Formwalze an, wodurch eine besonders gute Verbesserung der Haftung erzielt werden kann.

In einem vorteilhaften Ausführungsbeispiel kann auch die etwa senkrecht zur Oberfläche stehende Aussenfläche der Stege über ihre ganze Höhe aufgerauht sein. Weiter kann auch die ausserhalb der Stege liegende Oberfläche wenigstens in einem Bereich benachbart zu der Aussenfläche der Stege aufgerauht sein.

Die innerhalb der Stege liegende Vertiefung weist ausserdem vorzugsweise eine Innenwand auf, welche wenigstens in einem sich an die Stegoberfläche anschliessenden Randbereich etwa senkrecht zur Oberfläche verläuft und aufgerauht ist. Mit einer solchen Geometrie wird der Schlupf zusätzlich verringert.

Aus herstellungstechnischen Gründen ist es unter Umständen besonders einfach, wenn die Oberfläche der Stege und die zwischen den Stegen liegende Oberfläche aufgerauht ist. Es ist jedoch nicht erforderlich, die Vertiefungen vollständig aufzurauhen.

Beispielsweise bei topfförmigen Vertiefungen gerät der herzustellende Formkörper nur in den benachbart zu der Stegoberfläche liegenden Randbereichen mit der Oberfläche der Vertiefung in Berührung. Die Oberflächenstruktur der Vertiefung in einem unteren Bereich der Innenwand und im Bodenbereich ist deshalb hinsichtlich des Schlupfes von untergeordneter Bedeutung.

In einem weiteren bevorzugten Ausführungsbeispiel weisen die Stege ausserdem eine zwischen der Stegoberfläche und der Innenwand der Vertiefungen angeordnete Innenfase auf. Die Fase erlaubt ein sanfteres Ausstanzen der Formkörper aus den beiden miteinander verbundenen Bändern, wodurch die Qualität der Nahtbildung verbessert werden kann. Die Fase braucht nicht aufgerauht zu sein.

Die Art und Grösse der Rauheit der aufgerauhten Oberflächenbereiche der Formwalze hängt insbesondere von der Art des eingesetzten Materials ab. Es hat sich gezeigt, dass bei der Herstellung von Weichgelatinekapseln mit Gelatinebändern eine aufgerauhte Oberfläche mit einem arithmetischen Mittenrauhwert Rₐ von 1.0 bis 2.0 µm, vorzugsweise 1.4 bis 1.7 µm besonders vorteilhaft ist. Die aufgerauhte Oberfläche hat zusätzlich vorteilhaft etwa 150 bis 250 Spitzen/cm (Pc). Rauheitskenngrössen werden hier und im folgenden nach DIN 4760-65 angegeben.

Die Manteloberfläche einer Formwalze für eine Maschine zum Herstellen von Formkörper im Rotary-Die Verfahren wird in einem erfinduhgsgemässen Verfahren wenigstens teilweise einer Behandlung vorzugsweise mit einem körnigen Strahlmittel unterzogen und dabei aufgerauht. Selbstverständlich ist es möglich, andere Mittel und Verfahren zum Erzeugen von aufgerauhten Oberflächenstrukturen einzusetzen. Für die Verwendung der Formwalzen in der Herstellung von Weichgelatinekapseln hat es sich gezeigt, dass ein Strahlmittel mit einer Körnung von 0.2 bis 0.1 mm und mit annähernd runder Form oder unregelmässigem Bruch zu einer besonders vorteilhaften Rauheit führt. Es kann insbesondere Korund, Glas oder Sand eingesetzt werden.

.Die Oberfläche der Formwalze kann besonders einfach dadurch bearbeitet werden, dass die Formwalze auf einer Drehvorrichtung mit etwa fünf bis zehn U/min. gedreht und dabei mit dem Strahlmittel beaufschlagt wird. Vorteilhaft wird das Strahlmittel aus wenigstens einer Injektordüse gegen die Oberfläche der Formwalze gestrahlt, wobei die Injektordüse parallel zur Formwalze bewegt wird und die gesamte Walzenoberfläche abfährt.

In einem weiteren bevorzugten Ausführungsbeispiel wird das Strahlmittel mittels zwei im Winkel zueinander stehenden Injektordüsen gegen die Oberfläche der Formwalze gestrahlt.

Die Erfindung wird im folgenden in Ausführungsbeispielen und anhand der Zeichnungen näher erläutert. Es zeigen:
- Figur 1: eine schematische Darstellung einer Maschine zum Herstellen von Formkörpern im Rotary-Die Verfahren,
- Figur 2: eine dreidimensionale Darstellung eines Ausschnitts aus einer Formwalze,
- Figuren 3a und 3b: einen vergrösserten Ausschnitt von zwei verschiedenen Ausführungsbeispielen für einen Steg im Querschnitt,
- Figur 4: einen Ausschnitt mit vier Formstegen im Querschnitt,
- Figur 5: eine schematische Darstellung des erfindungsgemässen Verfahrens zum Bearbeiten der Oberfläche einer Formwalze, und
- Figur 6: ein Rauheitsprofil einer erfindungsgemäss aufgerauhten Oberfläche einer Formwalze.

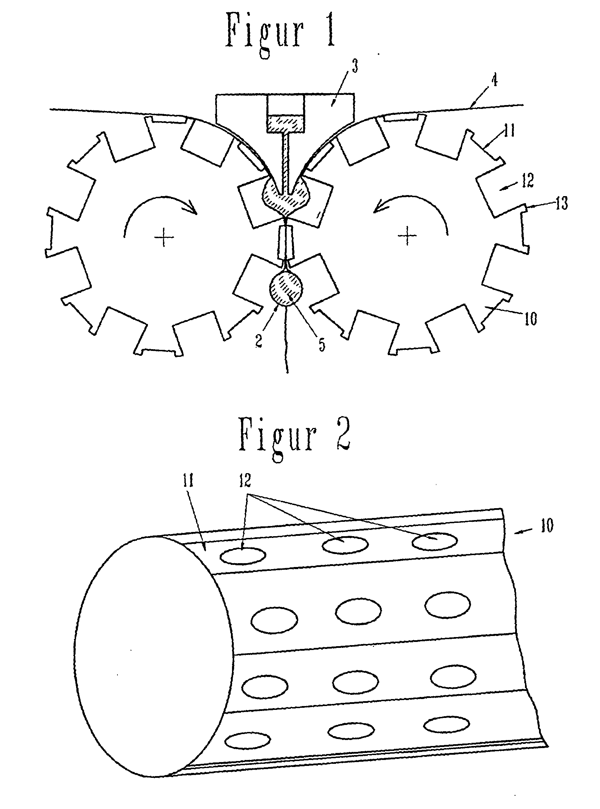

Figur 1 zeigt schematisch die Funktionsweise einer Maschine 1 zum Herstellen von Formkörpern 2, beispielsweise Weichgelatinekapseln im Rotary-Die Verfahren. Die Maschine 1 weist zwei Formwalzen 10 auf, welche gegensinnig rotieren. zwei Materialbahnen, beispielsweise Gelatinebänder 4, werden zwischen den beiden Formwalzen 10 durchgeführt. Ein Formkeil 3 erlaubt das Einspritzen eines Füllmaterials 5 in den Spickel zwischen die beiden Gelatinebänder 4. Die Formwalze besteht beispielsweise aus Stahl, Leichtmetall, Messing oder Gussmessing mit Brinellhärte HB von 120-300. Vorteilhaft ist insbesondere Messing CuZnPb3, Perunal® 215 oder 249.

Die Oberfläche 11 der Formwalzen 10 ist mit Vertiefungen 12 versehen. Die Vertiefungen 12 sind von Stegen 13 umrandet, welche von der Oberfläche 11 der Formwalzen 10 vorstehen.

Durch Einspritzen des Füllmittels 5 werden die beiden Bänder 4 in die Vertiefungen 12 verdrängt. Durch Drehen der beiden Formwalzen 10 werden die beiden Bänder 4 einander angenähert und durch Einwirkung der Stege 13 gegeneinander gepresst. Aufgrund dieser Aneinanderpressung werden die beiden Bänder 4 entlang einer Vielzahl von in sich geschlosenen Linien zu Formkörpern miteinander verbunden und die innerhalb dieser Kreislinien enthaltenen Formkörper 2 werden aus dem Band 4 ausgeschnitten.

Figur 2 zeigt schematisch einen Ausschnitt aus der Oberfläche 11 einer Formwalze 10. Die Oberfläche 11 weist eine Vielzahl von Vertiefungen 12 auf.

Figur 3a zeigt einen vergrösserten Ausschnitt A aus der Oberfläche 11 der Formwalze 10 gemäss Figur 1. Die Vertiefung 12 in der Oberfläche 11 der Formwalze 10 ist als etwa zylinderförmiger Topf dargestellt. Die Form der Vertiefung ist aber im vorliegenden Fall von geringerer Bedeutung. Die Vertiefung 12 ist von einem Steg 13 umgeben, welcher von der Oberfläche 11 der Formwalze 10 vorsteht. Im Ausführungsbeispiel gemäss Figur 3a ist die Stegoberfläche 20 aufgerauht. Die Innenwand 21 der Vertiefung 12 ist in einem sich an die Stegoberfläche 20 anschliessenden Randbereich 22 ebenfalls aufgerauht. Die etwa senkrecht zur Oberfläche 11 verlaufende Aussenfläche 25 der Stege 13 sowie ein zur Aussenfläche 25 benachbarter Bereich 30 der Oberfläche sind ebenfalls aufgerauht. Erfindungswesentlich ist, dass die Oberfläche im Bereich 15 der Stege wenigstens teilweise aufgerauht ist. Selbstverständlich müssen nicht alle in Figur 3a als aufgerauht dargestellten Bereiche aufgerauht werden.

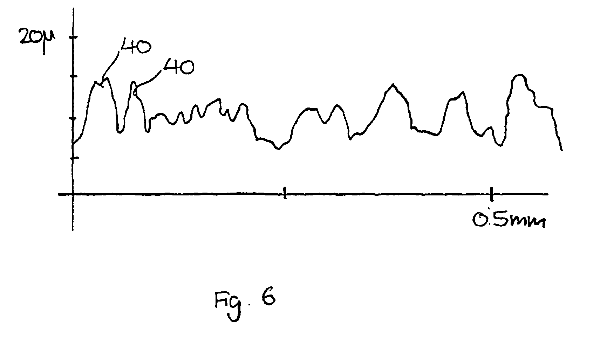

Die Höhe h der Stege über der Manteloberfläche beträgt im gezeigten Ausführungsbeispiel 0,5-1,0 mm und die Breite der Stege 13 beträgt 0,6-1,2 mm. Die Dimensionen hängen aber vor allem vom Anwendungszweck und von der Grösse der herzustellenden Formkörper ab. Ein Profil der aufgerauhten Oberfläche ist schematisch in Figur 6 dargestellt.

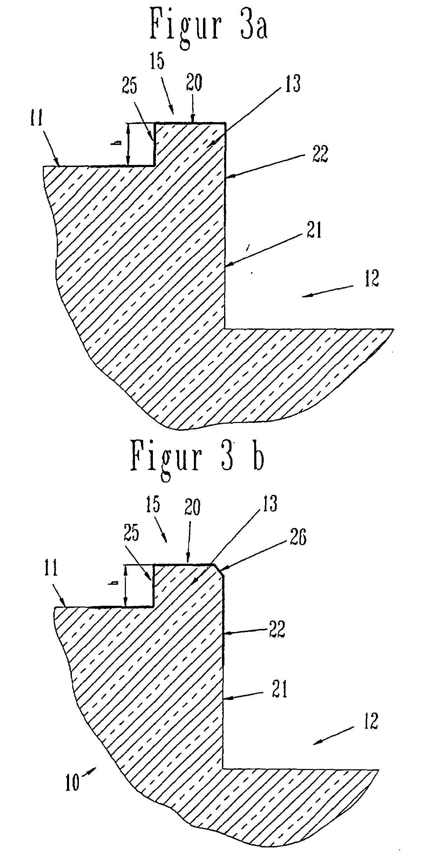

Figur 3b unterscheidet sich von Figur 3a nur insofern, dass die Stege 13 im Bereich 30, wo die Stegoberfläche 20 und die Innenwand 21 der Vertiefung 12 aneinandertreffen, eine Innenfase 26 aufweisen. Diese Abkantung am Innenrand der Stege führt zu einer besseren Nahtbildung und vermeidet die Bildung von Scherkanten während dem Formen der Kapsel. Im in Figur 3b gezeigten Ausführungsbeispiel beträgt die Breite der Innenfase 0.1 mm. Die Fase 20 braucht nicht aufgerauht zu sein.

Während des Formvorgangs legt sich das in Figur 1 gezeigte Band 4 insbesondere an die Stegoberfläche 20 und die Oberfläche 11. Es ist deshalb besonders wichtig, dass wenigstens diese Bereiche eine aufgerauht Oberfläche aufweisen.

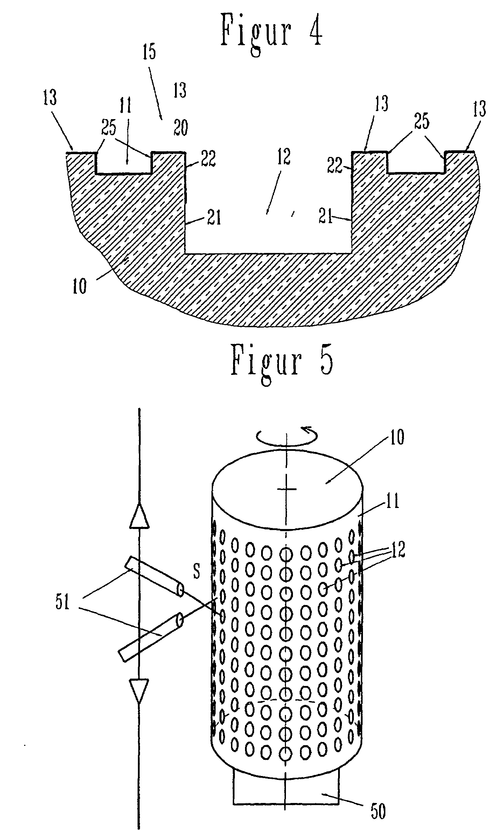

Figur 4 zeigt einen etwas grösseren Ausschnitt aus der Oberfläche 11 einer Formwalze 10. Eine Vertiefung 12 ist von einem umlaufenden Steg 13 umgeben. Der Steg 13 steht von der Manteloberfläche 11 der Formwalze 10 vor. Eine Vielzahl von einzelnen Vertiefungen 12 sind auf der Oberfläche 11 der Formwalze 10 angeordnet. Im Ausführungsbeispiel gemäss Figur 4 ist die gesamte Oberfläche 11 zwischen den Stegen 13 aufgerauht. Mit Ausnahme der unteren Teils der Innenwand 21 der Vertiefung 12 sowie des Bodens der Vertiefung 12 ist die gesamte Oberfläche 11 aufgerauht.

Figur 5 zeigt schematisch das erfindungsgemässe Verfahren zum Bearbeiten der Oberfläche der Oberfläche 11 einer Formwalze 10. Die Formwalze 10 wird mit einer schematisch dargestellten Drehvorrichtung 50 um ihre eigene Achse mit einer Geschwindigkeit von 2-10 U/min gedreht. Gleichzeitig wird ein Strahlmittel S aus zwei Injektordüsen 51 gegen die Oberfläche 11 der Formwalze 10 gestrahlt. Die beiden Injektordüsen 51 stehen im Winkel von 30-45° horizontal und 30-45° vertikal zueinander, wodurch sich eine besonders vorteilhafte Oberflächenbearbeitung ergibt. Horizontal und vertikal bezieht sich hier auf die während des Oberflächenbearbeitungsverfahrens im allgemeinen vertikale Achse der Formwalze. Vertikal bedeutet in einer Ebene parallel zur Achse der Formwalze und horizontal in einer Ebene senkrecht zur Formwalze. Die beiden Injektordüsen 51 werden mit einer Geschwindigkeit von bis zu 15 cm/min parallel zur Formwalze verschoben. Als Strahlmittel wird beispielsweise das Korund-Strahlmittel Biloxit Nr. 80 eingesetzt.

Figur 6 zeigt ein Profil durch einen der aufgerauhten Oberflächenbereiche der Formwalze 10. Die Oberfläche weist eine Vielzahl von zueinander beabstandeten Spitzen 40 auf. Die in Figur 6 dargestellte Oberfläche hat sich zur Herstellung von Weichgelatinekapseln als besonders vorteilhaft herausgestellt. Die Rauheit der aufgerauhten Oberfläche wird im konkreten Ausführungsbeispiel (Messgerät Mitutoyo® Surftest®-301) wie folgt definiert:

| | |
|---|---|
| Ra | 1.71 µm |
| Ry | 14.5 µm |
| Rz | 12.6 µm |
| Rp | 6.5 µm |
| Rq | 2.30 µm |
| Rt | 16.7µm |
| Pc | 173 cm |

Ra bezeichnet den arithmetischen Mittenrauhwert,
Ry bezeichnet die maximale Profilhöhe,
Rz die gemittelte Rauhtiefe,
Rp die maximale Profilkuppenhöhe.
Rt max. Profilhöhe pro Messstrecke
Pc die Anzahl Spitzen pro cm

Diese Oberfläche wurde durch Bestrahlung der Formwalze mit dem Korund-Strahlmittel Biloxit Nr. 80 (Körnung 0.149 bis 0.210 mm) bearbeitet. Die Bestrahlung der Formwalze erfolgte unter den folgenden Bedingungen:
Austellwinkel: 30° horizontal/30° vertikal
Zeit: 2 x 10 Minuten
Druck: 3 bar

Je nach dem zu verarbeitenden Materialbandes haben sich verschiedene Rauheiten als besonders günstig herausgestellt. Die optimale Rauheit wird fallspezifisch in Abhängigkeit des Materials für die Formkörper bestimmt.

Es hat sich gezeigt, dass in vielen Fällen die optimalen Rauheitswerte in den folgenden Bereichen liegen:
Ra: 1-2 µm
Ry: 8-25 µm
Rz: 7-16 µm
Rp: 3-12 µm
Rq: 1.8-3.5 µm
Rt: 8-25 µm
Pc: 150-250/cm

Wesentlich für die vorliegende Erfindung ist, dass die Oberfläche der Formwalze wenigstens teilweise aufgerauht ist, so dass sich eine bessere Haftreibung für die zu verarbeitenden Materialbänder ergibt. Die Art der Formkörper, die Art der Füllung der Formkörper und das verwendete Material ist für den Gegenstand der vorliegenden Erfindung von geringerer Bedeutung.

## Patentansprüche

1. Formwalze (10) für eine Maschine (1) zum Herstellen von Formkörpern (2), insbesondere Gelatinekapseln im Rotary-Die Verfahren, mit einer Oberfläche (11), die mit einer Vielzahl von Vertiefungen (12) mit einer Innenfläche (21) zur Aufnahme des herzustellenden Formkörpers (2) versehen ist,
wobei die Vertiefungen (12) je von einem über die Oberfläche (11) vorstehenden Steg (13) umgeben sind,
**dadurch gekennzeichnet, dass** die Oberfläche (11) wenigstens im Bereich (15) der Stege (13) wenigstens teilweise so aufgerauht ist, dass die Oberfläche einen arithmetischen Mittenrauhwert (Rₐ) nach DIN 4760-65 von wenigstens 1 µm aufweist.

2. Formwalze nach Anspruch 1, **dadurch gekennzeichnet, dass** die Stege (13) eine etwa parallel zur Oberfläche (11) verlaufende und über die ganze Fläche aufgerauhte Stegoberfläche (20) mit einem arithmetischen Mittenrauhwert (Rₐ) nach DIN 4760-65 von wenigstens 1 µm aufweisen.

3. Formwalze nach einem der Ansprüche 1 oder 2, **dadurch gekennzeichnet, dass** die Vertiefung (12) eine Innenwand (21) aufweist, welche wenigstens in einem sich an die Stegoberfläche (20) anschliessenden Randbereich (22) mit einem arithmetischen Mittenrauhwert (Rₐ) nach DIN 4760-65 von wenigstens 1 µm aufgerauht ist.

4. Formwalze nach einem der Ansprüche 1 bis 3, **dadurch gekennzeichnet, dass** der Steg eine Aussenfläche (25) aufweist, die über ihre ganze Höhe (h) so aufgerauht ist, dass der Randbereich einen arithmetischen Mittenrauhwert (Rₐ) nach DIN 4760-65 von wenigstens 1 µm aufweist.

5. Formwalze nach einem der Ansprüche 1 bis 4, **dadurch gekennzeichnet, dass** die Oberfläche (11) wenigstens in einem Bereich (30) benachbart zu einer Aussenfläche (25) der Stege (13) einen arithmetischen Mittenrauhwert (Rₐ) nach DIN 4760-65 von wenigstens 1 µm aufweist.

6. Formwalze nach einem der Ansprüche 1 bis 5, **dadurch gekennzeichnet, dass** die Oberfläche der Stege (13) und die zwischen den Stegen (13) liegende Oberfläche einen arithmetischen Mittenrauhwert (Rₐ) nach DIN 4760-65 von wenigstens 1 µm aufweist.

7. Formwalze nach einem der Ansprüche 1 bis 6, **dadurch gekennzeichnet, dass** die Stege (13) in einem Bereich (30) zwischen der Stegoberfläche (20) und der Innenfläche (21) der Vertiefungen (12) eine Fase (26) aufweisen.

8. Formwalze nach einem der vorangehenden Ansprüche, **dadurch gekennzeichnet, dass** die aufgerauhte Oberfläche einen arithmetischen Mittenrauhwert (Rₐ) nach DIN 4760-65 von 1.0 µm bis 2.0 µm, vorzugsweise 1.4 µm bis 1.7 µm und 150 bis 250 Spitzen (40) pro cm aufweist.

9. Verfahren zum Bearbeiten von Formwalzen für eine Maschine zum Herstellen von Formkörpern (2) im Rotary-Die Verfahren, **dadurch gekennzeichnet, dass** die Manteloberfläche (11) der Formwalze (10) wenigstens teilweise einer Behandlung unterzogen und dabei aufgerauht wird, insbesondere einer Behandlung mit einem körnigen Strahlmittel (S).

10. Verfahren nach Anspruch 9, **dadurch gekennzeichnet, dass** ein Strahlmittel (S) mit einer Körnung von 0.2 bis 0.1 mm vorzugsweise mit annähernd runder Form oder unregelmässigen Bruch eingesetzt wird.

11. Verfahren nach einem der Ansprüche 9 oder 10, **dadurch gekennzeichnet, dass** die Formwalze (10) auf einer Drehvorrichtung (50) mit fünf bis zehn U/min. gedreht wird und dabei mit einem Strahlmittel beaufschlagt wird.

12. Verfahren nach einem der Ansprüche 9 bis 11, **dadurch gekennzeichnet, dass** ein Strahlmittel mit wenigstens einer Injektordüse (51) gegen die Oberfläche der Formwalze (10) gestrahlt wird, wobei die Injektordüse (51) parallel zur Formwalze bewegt wird.

13. Verfahren nach Anspruch 12, **dadurch gekennzeichnet, dass** das Strahlmittel durch zwei im Winkel von 30-45° horizontal und 30-45° vertikal zueinander stehenden Injektordüsen (51) gegen die Oberfläche der Formwalze (10) gestrahlt wird.

14. Verfahren zum Herstellen von Formkörpern im Rotary-Die Verfahren, **gekennzeichnet durch** die Verwendung einer Formwalze (10) nach einem der Ansprüche 1 bis 8.

## Claims

1. Forming roller (10) for a machine (1) for producing shaped bodies (2), in particular gelatine capsules by the rotary die process, having a surface (11) which is provided with a multiplicity of recesses (12) with an inner surface (21) for receiving the shaped body (2) to be produced, the recesses (12) each being surrounded by a web (13) projecting beyond the surface (11), **characterized in that** the surface (11), at least in the region (15) of the webs (13), is at least partly roughened in such a way that the surface has an arithmetic average roughness value (Rₐ) according to DIN 4760-65 of at least 1 µm.

2. Forming roller according to Claim 1, **characterized in that** the webs (13) have a web surface (20) which runs approximately parallel to the surface (11) and is roughened over the entire area and has an arithmetic average roughness value (Rₐ) according to DIN 4760-65 of at least 1 µm.

3. Forming roller according to either of Claims 1 or 2, **characterized in that** the recess (12) has an inner wall (21) which, at least in a marginal region (22) adjoining the web surface (20), is roughened with an arithmetic average roughness value (Rₐ) according to DIN 4760-65 of at least 1 µm.

4. Forming roller according to one of Claims 1 to 3, **characterized in that** the web has an outer surface (25) which is roughened over its entire height (h) in such a way that the marginal region has an arithmetic average roughness value (Rₐ) according to DIN 4760-65 of at least 1 µm.

5. Forming roller according to one of Claims 1 to 4, **characterized in that** the surface (11), at least in a region (30) adjacent to an outer surface (25) of the webs (13), has an arithmetic average roughness value (Rₐ) according to DIN 4760-65 of at least 1 µm.

6. Forming roller according to one of Claims 1 to 5, **characterized in that** the surface of the webs (13) and the surface lying between the webs (13) have an arithmetic average roughness value (Rₐ) according to DIN 4760-65 of at least 1 µm.

7. Forming roller according to one of Claims 1 to 6, **characterized in that** the webs (13) have a bevel (26) in a region (30) between the web surface (20) and the inner surface (21) of the recesses (12).

8. Forming roller according to one of the preceding claims, **characterized in that** the roughened surface has an arithmetic average roughness value (Rₐ) according to DIN 4760-65 of 1.0 µm to 2.0 µm, preferably 1.4 µm to 1.7 µm, and 150 to 250 peaks (40) per cm.

9. Method of processing forming rollers for a machine for producing shaped bodies (2) by the rotary die process, **characterized in that** the lateral surface (11) of the forming roller (10) is at least partly subjected to a treatment and roughened in the process, in particular to a treatment with a granular abrasive (S).

10. Method according to claim 9, **characterized in that** an abrasive (S) having a grain size of 0.2 to 0.1 mm preferably with an approximately round shape or irregular fracture is used.

11. Method according to either of Claims 9 or 10, **characterized in that** the forming roller (10) is rotated on a turning device (50) at five to ten rev/min and an abrasive is applied to it in the process.

12. Method according to one of Claims 9 to 11, **characterized in that** an abrasive is blasted against the surface of the forming roller (10) by means of at least one injector nozzle (51), the injector nozzle (51) being moved parallel to the forming roller.

13. Method according to Claim 12, **characterized in that** the abrasive is blasted against the surface of the forming roller (10) through two injector nozzles (51) disposed horizontally at an angle of 30-45° to one another and vertically at an angle of 30-45° to one another.

14. Method of producing shaped bodies by the rotary die process, **characterized by** the use of a forming roller (10) according to one of Claims 1 to 8.

## Revendications

1. Rouleau de formage (10) pour une machine (1) pour fabriquer des corps profilés (2), en particulier des capsules de gélatine selon le procédé à matrice rotative, avec une surface (11) qui est pourvue d'une multiplicité de creux (12) présentant une surface intérieure (21) pour recevoir le corps profilé à fabriquer (2),
chaque creux (12) étant entouré par un rebord (13) qui dépasse de la surface (11),
**caractérisé en ce que** la surface (11), au moins dans la zone (15) des rebords (13), est rendue au moins partiellement rugueuse de manière à présenter une rugosité moyenne arithmétique (Rₐ) selon DIN 4760-65 d'au moins 1 µm.

2. Rouleau de formage selon la revendication 1, **caractérisé en ce que** les rebords (13) présentent une surface de rebord (20) à peu près parallèle à la surface (11) et rendue rugueuse sur toute la surface, avec une rugosité moyenne arithmétique (Rₐ) selon DIN 4760-65 d'au moins 1 µm.

3. Rouleau de formage selon la revendication 1 ou 2, **caractérisé en ce que** le creux (12) présente une paroi intérieure (21) qui est rendue rugueuse, au moins dans une zone de bordure (22) qui fait suite à la surface de rebord (20), avec une rugosité moyenne arithmétique (Rₐ) selon DIN 4760-65 d'au moins 1 µm.

4. Rouleau de formage selon l'une des revendications 1 à 3, **caractérisé en ce que** le rebord présente une surface extérieure (25) qui est rendue rugueuse sur toute sa hauteur (h) de telle sorte que la zone de bordure présente une rugosité moyenne arithmétique (Rₐ) selon DIN 4760-65 d'au moins 1 µm.

5. Rouleau de formage selon l'une des revendications 1 à 4, **caractérisé en ce que** la surface (11), au moins dans une zone (30) voisine d'une surface extérieure (25) des rebords (13), présente une rugosité moyenne arithmétique (Rₐ) selon DIN 4760-65 d'au moins 1 µm.

6. Rouleau de formage selon l'une des revendications 1 à 5, **caractérisé en ce que** la surface des rebords (13) et la surface située entre les rebords (13) présentent une rugosité moyenne arithmétique (Rₐ) selon DIN 4760-65 d'au moins 1 µm.

7. Rouleau de formage selon l'une des revendications 1 à 6, **caractérisé en ce que** les rebords (13) présentent un biseau (26) dans une zone (30) située entre la surface de rebord (20) et la surface intérieure (21) du creux (12).

8. Rouleau de formage selon l'une des revendications précédentes, **caractérisé en ce que** la surface rendue rugueuse présente une rugosité moyenne arithmétique (Rₐ) selon DIN 4760-65 de 1,0 µm à 2,0 µm, de préférence de 1,4 µm à 1,7 µm, et 150 à 250 pointes (40) par cm.

9. Procédé pour usiner des rouleaux de formage pour une machine pour fabriquer des corps profilés (2) selon le procédé à matrice rotative, **caractérisé en ce que** la surface latérale (11) du rouleau de formage (10) est soumise au moins partiellement à un traitement en étant rendue rugueuse, en particulier à un traitement à l'aide d'un abrasif granuleux (S).

10. Procédé selon la revendication 9, **caractérisé en ce qu'**on utilise un abrasif (S) avec une grosseur de grain de 0,2 à 0,1 mm, de préférence avec une forme approximativement ronde ou une brisure irrégulière.

11. Procédé selon la revendication 9 ou 10, **caractérisé en ce que** le rouleau de formage (10) tourne sur un dispositif rotatif (50) à une vitesse de cinq à dix tours/minutes tout en étant soumis à un abrasif.

12. Procédé selon l'une des revendications 9 à 11, **caractérisé en ce qu'**un abrasif est projeté contre la surface du rouleau de formage (10) à l'aide d'au moins un injecteur (51), cet injecteur (51) étant déplacé parallèlement au rouleau de formage.

13. Procédé selon la revendication 12, **caractérisé en ce que** l'abrasif est projeté contre la surface du cylindre de formage (10) par deux injecteurs (51) disposés suivant un angle de 30-45° à l'horizontale et de 30-45° à la verticale.

14. Procédé pour fabriquer des corps profilés selon le procédé à matrice rotative, **caractérisé par** l'utilisation d'un rouleau de formage (10) selon l'une des revendications 1 à 8.
